# EUROPEAN PATENT SPECIFICATION

(11) **EP 3 412 973 B1**
(45) Date of publication and mention of the grant of the patent: **28.02.2024**
(21) Application number: 17174764.5
(22) Date of filing: 07.06.2017
(51) Int. Cl.: F24C 15/00, F24C 7/08

(54) **OVEN COMPRISING AN ASSEMBLY FOR DETECTING OPERATING PARAMETERS WITHIN THE OVEN CAVITY**
OFEN MIT EINER ANORDNUNG ZUR ERFASSUNG VON BETRIEBSPARAMETERN INNERHALB DES OFENRAUMES
FOUR COMPRENANT UN ENSEMBLE DE DÉTECTION DES PARAMÈTRES DE FONCTIONNEMENT À L'INTÉRIEUR DE LA CAVITÉ DU FOUR

(43) Date of publication of application: 12.12.2018
(73) Proprietor: ELECTROLUX APPLIANCES AKTIEBOLAG, 105 45 Stockholm (SE)
(72) Inventor: HOFMANN, Arnd, 91541 Rothenburg ob der Tauber (DE); SCHLÖTTERER-FRATOIANNI, Klaus, 91541 Rothenburg ob der Tauber (DE)
(74) Representative: Electrolux Group Patents

(56) References cited:
- EP-A2- 0 504 555
- DE-A1-102012 218 758
- DE-U1-202007 010 358
- GB-A- 2 207 514
- JP-A- S 611 927
- JP-A- S5 929 926
- JP-A- S58 221 326
- JP-A- 2002 130 683
- JP-A- 2010 266 115
- US-A- 4 461 941
- US-A- 5 272 963
- US-A- 5 689 060
- US-A1- 2001 052 853
- US-A1- 2008 134 904
- US-A1- 2011 278 279
- US-A1- 2015 257 591
- US-B2- 9 243 961

## Description

The present invention relates to an oven comprising an an assembly for detecting operating parameters within the oven cavity.

Modern cooking ovens often are equipped with sensors to detect operating parameters within the oven cavity, such as temperature and/or humidity within the oven cavity. The oven also may be equipped with optical sensors, such as an imaging system, to automatically detect or monitor the load within the oven cavity, so as to control operating parameters of the oven in dependency of the load detected or of the cooking progress, such as a degree of change in size or color of the food items being processed.

Evidently, in order to be able to detect the parameter or parameters to be monitored, the sensors have to be placed at a location that allows picking up the signals that are representative of the parameter to be monitored, which necessitates that the one or more sensors have to be arranged in close proximity to the oven cavity. In case that the sensor is an optical sensor, the sensor has to be located in eye-sight of the oven cavity. Due to the harsh conditions prevailing in an oven, such as high temperature and high humidity, it was suggested in the prior art to locate the sensor in a chamber that is separate from the oven cavity, such as within an air channel that is used to vent air from within the oven cavity to the exterior. A problem with such systems, as they were suggested for example in US 5 689 060 A, DE10 2004 210 673 A1, DE10 2004 056 839 A1 and in DE 10 2006 058 617 B3, is that the sensor necessarily has to be positioned remote from the oven cavity, which for an optical sensor is disadvantageous due to the limited field of view. Furthermore, when the sensor is located within a vent channel, so as to be cooled by air that is removed from within the oven cavity, not only does the positioning of the sensor within the vent channel interfere with, and thus deteriorate, the venting action, but also is the sensor cooling rather limited, given that the air that leaves the oven cavity is of high temperature.

In GB 2 207 514 A there is suggested an apparatus for determining atmospheric humidity in an oven which apparatus comprises a temperature sensor for measuring a temperature curve that is induced by cooling the interior side of a wall element, the outer side of which is exposed to the oven cavity. By measuring the temperature curve of the wall during re-heating after such a cooling boost, conclusions are drawn on the humidity prevailing within the oven cavity.

US 2001 0052853 A1 describes a smoke detector for an oven that is provided with a self-cleaning function which involves heating the oven cavity to very high temperatures of about 800 F (427 °C). Similarly, as the above mentioned sensors, also the smoke detector of US 2001 0052853 A1 comprises a measuring chamber that is provided separate from the oven cavity.

Furthermore, in US 4 461 941 A1 there is disclosed a microwave oven having an infrared sensor mounted in a chamber adjacent the cavity, which sensor can be cooled by passing air that is withdrawn from the cavity through the sensor housing. The concept suggested in US 4 461 941 A1 is not suitable for an oven in which as mentioned above there are prevailing harsh conditions, such as high temperature and high humidity.

US 2015 0257591 A1 discloses an appliance with a sensor directed toward a cooking surface positioned beneath the sensor for a monitoring of the cooking surface. The sensor is included in a microwave appliance mounted to an upper set of kitchen cabinets above an oven range comprising said cooking surface. The microwave appliance also includes an air pathway and a fan, which operate like an extraction hood for a removal of vapours resulting from cooking processes on the cooking surface. The sensor is arranged in an inner housing, which itself is arranged in an outer housing that is in fluid communication with the pathway. A portion of the airflow in the pathway is guided through outer and inner housings to the outside, thereby acting to protect a sensing end of the sensor by blowing away contaminants generated during the cooking processes.

According to the disclosure of JP S61 1927 A, a microwave oven includes a heating chamber with an upper wall, on the outer side thereof a metal outer box surrounding an inner box is supported. The inner box houses a sensor for infrared temperature measurement. To this end, both inner and outer boxes have openings at their bottom wall allowing infrared rays to be transmitted from an item to be cooked to the sensor. The outer box is connected to a fan, which is arranged to blow cooling air into the space between outer and inner boxes, which cooling air causes a cooling effect onto the sensor inside of the inner box.

Also, JP S59 29926 A discloses a microwave oven having an infrared sensor for monitoring the temperature of an item to be cooked, which sensor is arranged in a box on the top side of an upper wall of a heating chamber of the microwave oven and is provided with cooling air supplied by a fan. The sensor is directly positioned in the airflow generated by the fan. The sensor receives infrared rays from the item to be cooked through an opening in the upper wall, which also forms an exhaust opening for the airflow.

Further relevant prior art is provided by document JP S58 221326 A, disclosing an infrared sensor arranged in a housing mounted to an exterior side of a wall of the oven cavity, and by documents US 2008/134904 A1, EP 0 504 555 A2, JP 2010 266115 A and US 5 272 963 A disclosing sensors arranged in the vicinity of the oven cavity, wherein the sensor arrangement comprise a heat sink.

It is an object of the present invention to provide for an oven comprising an assembly for detecting operating parameters within the oven cavity which reliably allows monitoring the respective operating parameter to be monitored, but which at the same time is effectively protected against the harsh environment that may prevail within the oven cavity during a cooking process.

In accordance with the present invention the above object is solved by oven according to the appended claim 1.

Instead of providing for a sensor that is to be located in a region of the oven, where there are less harsh operating conditions as compared to those prevailing within the oven cavity, as it was suggested in the prior art, the present invention provides for a sensor assembly in which the sensor has its own cooling system, by arranging the sensor within a housing through which ambient air can be fed. In this manner it is made possible to arrange temperature-sensitive sensor systems, such as imaging systems or humidity sensors, in direct ambience of an oven cavity.

In this manner, more direct and thus precise information can be obtained with respect to the state of the food product under treatment, the degree of preparation of the food product being processed, the state of the oven muffle and the oven cavity including any components therein. By evaluating the monitored parameters, potentially detrimental or even hazardous situations can be prevented, such as overheating of food or of oven components. Apart from providing for prevention against abnormal or abusive operation of the appliance, continuously monitoring respective parameters also allows for automation of the food treatment, wherein the appliance automatically adjusts operation parameters in dependency of the monitored parameters.

Preferred embodiments of the present invention are defined in the dependent claims.

Thus, in order to facilitate removal of heat from the sensor, a heatsink is disposed within the housing in contact with the sensor. The heatsink preferably is an element having a large thermal capacity, and further preferably is designed to have a large surface area so as to facilitate heat exchange with its surroundings, so that the heat sink acts as a dissipator for the heat that has been captured.

To improve the heat transfer between the heatsink and the sensor, preferably a thermal interface material is disposed between the heatsink and the sensor, such as thermal grease, thermal glue or a thermal adhesive, which improves the thermal conductivity between the heatsink and the sensor by eliminating gaps or spaces between these components.

The sensor can comprise any sensor, or combination of sensors, suitable to detect signals characteristic for a parameter to be monitored. In particular, the sensor may comprise at least one of an optical sensor, an imaging system, a humidity sensor, a temperature sensor, a gas sensor, a sound sensor, and a chemical sensor, or the like. Thus various signals can be picked up to monitor the cooking progress. Amongst optical parameters to be monitored are to be named the amount and distribution of food items loaded into the oven, a change in color of food items processed such as the degree of browning of an article being roasted or baked, a change in shape, such as the rising of a dough, and the like. While temperature and humidity within the oven cavity are important parameters to be monitored by respective sensors, sound sensors can be employed for example for boiling detection, or for detection of certain sound events such as the popping sound when preparing popcorn. Vapor sensors, gas sensors or other chemical sensors can be employed to detect the generation of various substances.

In preferred embodiments, the housing comprises a cover which covers a receptive region of the sensor element but which is permeable for the physical or chemical parameter to be detected by the sensor.

Thus, when the sensor is a humidity sensor, the cover preferably comprises a membrane, such as a PTFE membrane, which is permeable for water vapor, but which protects the receptive region of the sensor from water and dust.

When the sensor is an optical sensor, the cover preferably comprises a transparent element, such as a cover made of glass or transparent plastic, wherein in further preferred embodiments the transparent element is designed as an optical filter and/or lens, so as to further enhance and optimize the optical transmission to the sensor.

In order to avoid rapid warming of the sensor housing, the housing or at least parts thereof are made from a material having a thermal conductivity at standard conditions (i.e. atmospheric pressure and a temperature of about 293 K) of less than 10 W/m·K, preferable of less than 1 W/m·K, which can be realized for example with certain heat resistant plastic materials, such as PTFE.

The housing support, which is included for mounting the housing to a wall of the oven cavity according to one aspect of the invention, can be designed not only to facilitate mounting of the sensor assembly, but also to provide for further thermal protection of the assembly, such as by making the housing support of a material which has a lower thermal conductivity than the housing.

According to an embodiment not covered by the claims, the oven comprises means for generating a forced air flow which is directed to the air inlet, wherein the sensor assembly is located within the oven cavity. Due to the fact that the assembly comprises a housing within which there is disposed the sensor and which is designed such that an air flow can be passed through the housing so as to cool the sensor, the assembly can be located within the oven cavity as such where it can be used for direct measurements of parameters to be monitored.

The air flow to be passed through the housing so as to cool the sensor can be generated either by a fan that is used to feed air into the oven cavity, wherein the air flow to the sensor assembly is diverted from the air volume passed into the cavity. In order to provide for cooling of the sensor assembly independent from the operation of the fan that is used to provide air into the oven cavity, preferably the oven is equipped with a dedicated fan that is used to provide air for cooling one or more sensor assemblies.

According to the invention, the sensor assembly is mounted to the exterior side of a wall of the oven cavity and communicates with the interior of the oven cavity through a region provided in the wall of the oven cavity which is permeable for the physical or chemical parameter to be detected by the sensor. Depending on the parameter to be detected, such permeable region can be simply an opening in the wall of the oven cavity, or a transparent element, a sound-transmissive element, a light-transmissive element, a membrane, and the like.

To reduce the number of parts, the housing can be formed in part by a deep drawn region in a wall of the oven cavity.

The air which is passed into the assembly housing for cooling of the sensor either can be expelled into the oven cavity, or can be used for further purposes, such as for the cooling of at least one further sensor assembly, for cooling an exterior wall of the assembly housing, or can be vented to the exterior of the oven.

Both, in the inventive oven in which the assembly is mounted to the exterior side of a wall of the oven cavity and communicates with the interior of the oven cavity through a permeable region in the wall of the oven cavity, but also in embodiments not covered by the claims in which the assembly is mounted within the oven cavity and wherein the sensor assembly as such comprises a permeable cover, the air outlet advantageously comprises one or more outlet openings located in the perimeter of the cover, so as to provide for an air stream which protects the permeable region or the cover, respectively, from oven fumes, so as to prevent soiling for example by oil or soot particles contained in such fumes.

To further improve such protecting effect of the exiting air flow, the outlet openings are arranged such that the air is expelled in a turbulent flow, as may be attained for example by merging the exit flows leaving individual outlet openings, such as by providing for an inclination of the axis along which the air flows leave the outlet openings, or by orienting the outlet openings in a manner so as to provide for a swirling flow.

To further prevent heating of the assembly, an insulation layer can be provided at a wall of the housing which faces towards the oven cavity.

In embodiments of the present invention, elements of the assembly can be formed as an integral part so as to facilitate mounting of the assembly by reducing the number of elements to be assembled. Thus, for example a heat sink can be formed as an integral part of the housing.

Preferred embodiments of the present invention will be described by reference to the drawings in which:
- Fig. 1: shows a sectional view of a first embodiment of a sensor assembly in accordance with the present invention;
- Fig. 2: shows a sectional view of a second embodiment of a sensor assembly in accordance with the present invention;
- Fig. 3: shows a sectional view of a third embodiment of a sensor assembly in accordance with the present invention;
- Fig. 4: is a perspective view of the sensor assembly illustrated in Fig. 2;
- Fig. 5: illustrates an exploded view of a sensor assembly in accordance with the present invention, wherein the sensor is an optical sensor; and
- Fig. 6: illustrates an exploded view of a sensor assembly in accordance with the present invention, wherein the sensor is a humidity sensor.

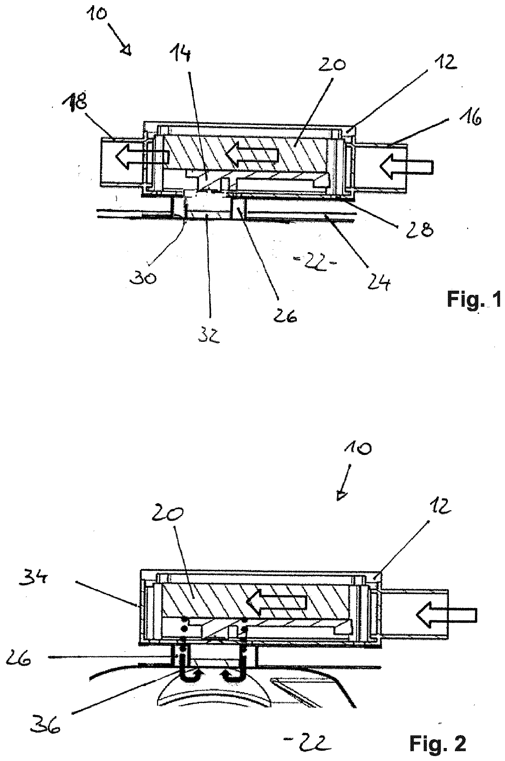

Fig.1 illustrates a sensor assembly made in accordance with the present invention. Sensor assembly 10 comprises a housing 12 in which there is located a sensor element 14, which in the embodiment shown in Fig. 1 comprises an imaging system having a camera. Housing 12 comprises an air inlet 16 for feeding air into the housing 12 and an air outlet 18 through which air can leave the housing 12 upon having passed over and along the sensor element 14 for cooling thereof, as is depicted in Fig. 1 by arrows. To further facilitate heat being withdrawn from sensor element 14, the sensor assembly 10 comprises a heat sink 20 which is mounted on the side of the sensor element 14 facing away from an oven cavity 22, which is formed by an oven muffle of which in Fig. 1 there only is shown a portion of an upper wall 24.

As shown in Fig. 1, sensor assembly 10 comprises an annular portion 26 protruding from a bottom wall 28 of housing 12, which is mounted within an opening 30 of the upper wall 24 of the oven muffle. To prevent oven fumes from entering the annular portion 26, there is provided a transparent element 32 which enables the sensor element 14 to monitor the interior of the oven cavity 22.

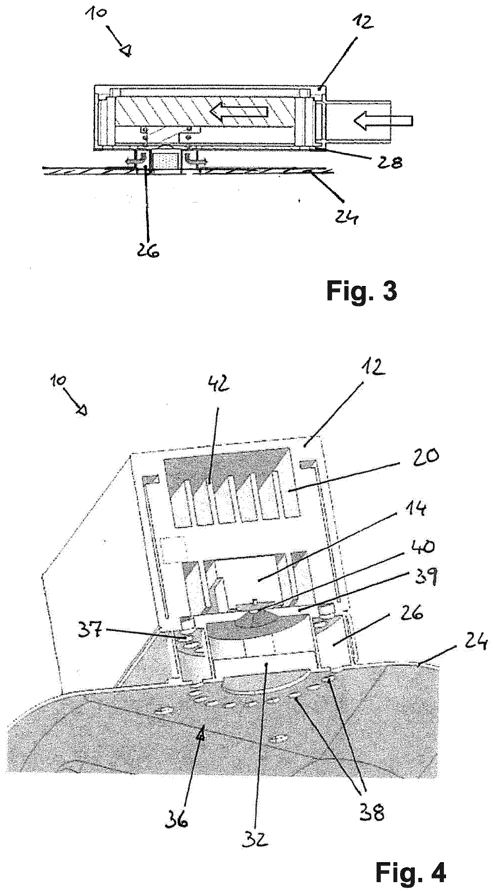

Fig. 2 shows a sensor assembly which differs from the one illustrated in Fig. 1 in that the air that is passed into the housing 12 via air inlet 16 is expelled into the oven cavity 22. To this end housing 12 comprises a wall 34 that closes the end of the housing 12 opposite air inlet 16, and further comprises an air outlet 36 at the bottom of annular portion 26. As is shown in further detail in the perspective view of Fig. 4, annular portion 26 can be designed as an annular channel, into which air leaving housing 12 enters via a plurality of openings 37 and from which the air is passed into the oven cavity 22 in an annular flow around transparent element 32 via a plurality of outlet openings 38.

In the embodiment illustrated in Figs. 2 and 4, the sensor assembly 10 further is designed for use in an oven that in addition to a heating capability, such as by heating elements, hot air or steam, further provides for a microwave function. While the sensor assembly 10 is protected from oven fumes by the transparent element 32, in order to protect the sensor element 14 from microwaves there additionally is provided a metallic wall 39 having an aperture 40 in close proximity to the optical sensor element 14.

As can be best seen in Fig. 4, the heat sink 20 is provided with a plurality of fins 42 which provide for a large surface area of the heat sink 20 to thus improve the heat exchange with cooling air that is passed through the housing 12.

In Fig. 3 there is shown a variant of a sensor assembly 10 that is similar to the ones shown in Figs. 1 and 2, but in which the air leaving housing 12 is expelled laterally from the annular portion 26, so as to be fed into the space between upper wall 24 of the oven muffle and bottom wall 28 of housing 12, so as to provide for additional cooling of housing 12 and further to provide for an insulating air layer between the upper wall 24 of the oven muffle and the bottom wall 28 of the assembly housing 12.

While in the embodiments shown in Figs. 1 and 3 the air flow after cooling the sensor is used to provide for further cooling, either of another sensor as in the Fig. 1 embodiment, or another part of the same sensor assembly as in the Fig. 3 embodiment, the air leaving the sensor assembly also can be used to provide a dynamic air barrier, preferably by providing for a turbulent swirling flow, which prevents oven fumes or other dirt particles from reaching the active sensor area.

Whereas in the embodiments illustrated in Figs. 1 to 4 at least a portion of the sensor assembly 10 is located behind a wall of the oven muffle, it is to be understood that similarly as is shown for the annular portion 26, also the entire bottom wall 28 could be in direct contact with the interior of the oven cavity 22, such as by arranging assembly 10 in an opening in a wall of the oven muffle (similarly as opening 30), the size of which corresponds to the size of the bottom wall 28. Furthermore, in an embodiment not covered by the claims, due to the cooling capacity of the sensor assembly also the entire sensor assembly 10 could be arranged within the interior 22 of the oven cavity, such as within a depression of a wall of the oven muffle, which depression may be formed as a deep drawn region of the oven muffle.

The sensor assembly suggested herein is capable of sufficiently cooling sensors for use within a baking oven, which further to having resistance heating elements may incorporate at least one other heating technology, such as steam generation or microwave generation, and which further may be provided with a pyrolytic cleaning capacity.

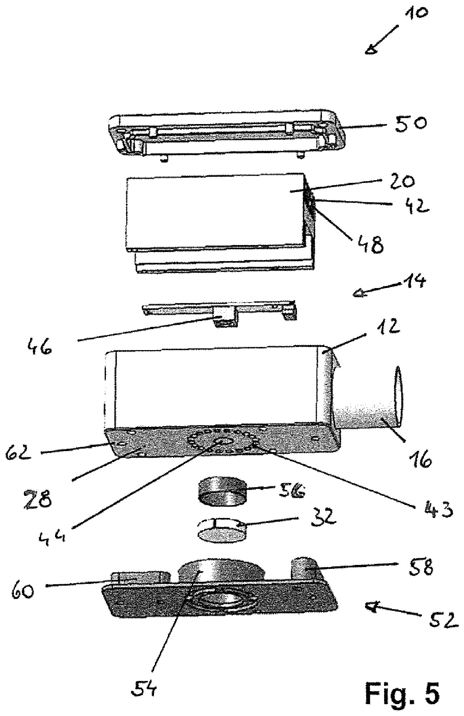

In Fig. 5 there is shown an exploded view of a further embodiment of a sensor assembly 10 in accordance with the present invention.

The sensor assembly 10 shown in Fig. 5 comprises a generally box shaped housing 12 which at one end comprises an integrally formed air inlet 16. Housing 12 which is open at its upper side comprises a bottom wall 28 in which there are provided a plurality of outlet openings 43 which are located to form a circle around a central opening 44. Within housing 12 there is located a sensor element 14, which in the embodiment depicted in Fig, 5 is designed as an optical sensor having a camera element 46 which in the assembled state is located above central opening 44. Above sensor element 14 there is shown a heat sink 20 which in the assembled state contacts sensor element 14 so as to withdraw heat from the sensor element. Similarly as the heat sink 20 shown in Fig. 4, also in the embodiment shown in Fig. 5 the heat sink 20 comprises a plurality of lamellas 42 so as to increase the surface area of heat sink 20 about a channel 48 through which air is passed during use of the sensor assembly. The opening at the upper side of housing 12 is closed by a lid 50, which further also could be formed as an integral part with the heat sink 20.

While so far the sensor assembly 10 shown in Fig. 5 is similar to the one shown in Figs. 2 and 4, in the Fig. 5 embodiment there is provided a housing support 52 for mounting the sensor assembly to a wall of the oven cavity, either at the exterior side or, according to en embodiment not covered by the claims, at the interior side thereof. The housing support 52 is made of a temperature resistant material which preferably has a lower thermal conductivity than the housing 12 so as to provide for thermal protection thereof. Housing support 52 comprises at its upper side an annular wall 54 within which there is provided a receptacle (not shown in Fig. 5) for a transparent element 32, and which forms together with an annular element 56 an annular channel for air leaving outlet openings 28. Housing support 52 further comprises supports 58 and 60 for supporting the bottom wall 28 of housing 12. In order to provide for additional thermal insulation of housing 12, an insulation layer 62 is provided at the bottom wall 28 of housing 12.

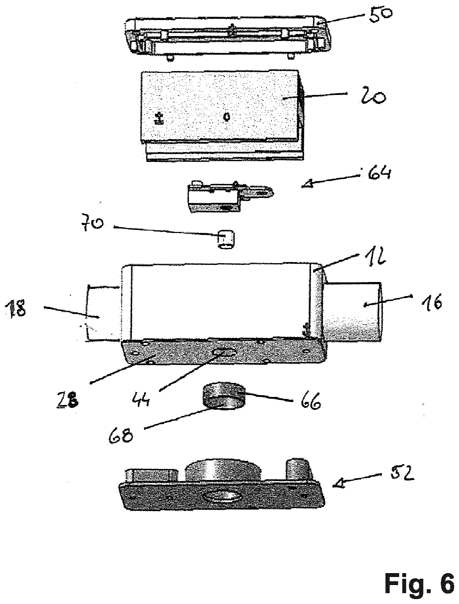

In Fig. 6 there is shown a sensor assembly similar as the one shown in Fig. 5, wherein the assembly comprises a housing 12 that is mounted on a housing support 52. However, in the embodiment shown in Fig. 6, the assembly is designed for use with a humidity sensor 64. Furthermore, in contrast to the embodiment shown in Fig. 5, where the air used for cooling the sensor is expelled into the oven cavity, in the embodiment shown in Fig. 6 there is provided an air outlet 18 as is shown also in Fig. 1.

Correspondingly the bottom wall 28 of housing 12 has no air opening 43 as shown in Fig. 5, but only is provided with an opening 44 that is in alignment with the humidity sensor 64 as shown in Fig. 6. In order to protect humidity sensor 64 from contact with water droplets or other particles contained in the oven fumes, there is provided an annular element 66 which carries a membrane 68 that is permeable to water vapor. Element 70 shown in Fig. 6 is a connection ring for mounting humidity sensor 64 within housing 12.

### Reference signs

- 10: sensor assembly
- 12: housing
- 14: sensor element
- 16: air inlet
- 18: air outlet
- 20: heat sink
- 22: oven cavity
- 24: upper wall of oven muffle
- 26: annular portion
- 28: bottom wall of 12
- 30: opening in 24
- 32: transparent element
- 34: wall of 12
- 36: air outlet
- 37: openings
- 38: outlet openings
- 39: metallic wall
- 40: aperture
- 42: fins
- 43: outlet openings
- 44: central opening
- 46: camera element
- 48: channel
- 50: lid
- 52: housing support
- 54: annular wall
- 56: annular element
- 58: support
- 60: support
- 62: insulation layer
- 64: humidity sensor
- 66: annular element
- 68: membrane
- 70: connection ring

## Claims

1. An oven comprising:
- an oven muffle which encloses an oven cavity (22);
- a sensor assembly (10) comprising a sensor element (14) configured to monitor the interior of the oven cavity (12), wherein the sensor assembly (10) is mounted to an exterior side of a wall (24) of the oven cavity (22) and communicates with the interior of the oven cavity through a region provided in the wall of the oven cavity which is permeable for the physical or chemical parameter to be detected by the sensor;
- at least one fan arranged to provide air for cooling the sensor assembly (10),
- the sensor assembly (10) having a housing (12) in which the sensor (14, 64) is arranged such that it can communicate with the interior of the oven cavity through the permeable region in the wall of the oven cavity;
- the housing (12) having an air inlet (16) for feeding air into the housing (12);
- the housing (12) having at least one air outlet (18, 38) through which air can leave the housing (12); the oven being **characterized by** :
- the sensor assembly (10) having a heatsink (20) disposed within the housing (12) in contact with the sensor (14, 64).

2. The oven of claim 1, further comprising:
a thermal interface material disposed between the heatsink (20) and the sensor (14, 64).

3. The oven of claim 1, comprising a fan for feeding ambient air to the air inlet (16).

4. The oven of claim 3, comprising a fan that is used to feed air into the oven cavity, wherein the air flow to the sensor assembly is diverted from the air volume passed into the cavity.

5. The oven of claim 3, comprising a fan for providing air into the oven cavity, and a dedicated fan for feeding air to the sensor assembly independent from the operation of the fan for providing air into the oven cavity.

6. The oven of any one of the preceding claims wherein the sensor (14, 64) comprises at least one of an optical sensor, an imaging system, a humidity sensor, a temperature sensor, a gas sensor, a sound sensor, and a chemical sensor.

7. The oven of any one of the preceding claims comprising a cover (32; 68) which covers a receptive region of the sensor element (14, 64) but which is permeable for the physical or chemical parameter to be detected by the sensor.

8. The oven of claim 7, wherein the sensor is a humidity sensor (64) and the cover comprises a membrane (68) which is permeable for water vapor.

9. The oven of claim 7, wherein the sensor (14) is an optical sensor and the cover (32) comprises a transparent element.

10. The oven of claim 9, wherein the transparent element (32) is designed as an optical filter and/or lens.

11. The oven of any one of the preceding claims, wherein the housing (12) or parts thereof are made from a material having a thermal conductivity at standard conditions of less than 10 W/m-K, preferable of less than 1 W/m-K.

12. The oven of any one of the preceding claims, further comprising a housing support (52) for mounting the housing to a wall (24) of the oven cavity (22).

13. The oven of claim 12, wherein the housing support (52) is made of a material having a lower thermal conductivity than the housing (12).

14. The oven of claim 7, wherein the air outlet comprises one or more outlet openings (38) located in the perimeter of the cover (32, 68).

15. Oven of any one of claims 1 to 13, wherein the air outlet is located in a wall of the housing (12) so as to expel air to the exterior side of the housing.

16. The oven of any one of claims 1 to 13, wherein the air outlet (18) is connected to a conduit to remove air from the assembly (10).

17. The oven of any one of the preceding claims, further comprising an insulation layer (62) at a wall (28) of the housing (12) facing towards the oven cavity (22).

## Patentansprüche

1. Ofen, umfassend:
- eine Ofenmuffel, die einen Ofenhohlraum (22) umschließt;
- eine Sensoranordnung (10), die ein Sensorelement (14) umfasst, das dazu ausgelegt ist, das Innere des Ofenhohlraums (12) zu überwachen, wobei die Sensoranordnung (10) an einer Außenseite einer Wand (24) des Ofenhohlraums (22) angebracht ist und mit dem Inneren des Ofenhohlraums durch einen in der Wand des Ofenhohlraums bereitgestellten Bereich kommuniziert, der für die durch den Sensor zu detektierenden physikalischen oder chemischen Parameter durchlässig ist;
- mindestens einen Ventilator, der dazu angeordnet ist, Luft zum Kühlen der Sensoranordnung (10) bereitzustellen,
- wobei die Sensoranordnung (10) ein Gehäuse (12) aufweist, in dem der Sensor (14, 64) derart angeordnet ist, dass er mit dem Inneren des Ofenhohlraums durch den durchlässigen Bereich in der Wand des Ofenhohlraums kommunizieren kann;
- wobei das Gehäuse (12) einen Lufteinlass (16) zum Zuführen von Luft in das Gehäuse (12) aufweist;
- wobei das Gehäuse (12) mindestens einen Luftauslass (18, 38) aufweist, durch den Luft das Gehäuse (12) verlassen kann; wobei der Ofen **dadurch gekennzeichnet ist, dass**:
- die Sensoranordnung (10) eine Wärmesenke (20) aufweist, die in dem Gehäuse (12) in Kontakt mit dem Sensor (14, 64) angeordnet ist.

2. Ofen nach Anspruch 1, ferner umfassend:
ein Wärmeleitmaterial, das zwischen der Wärmesenke (20) und dem Sensor (14, 64) angeordnet ist.

3. Ofen nach Anspruch 1, umfassend einen Ventilator zum Zuführen von Umgebungsluft zu dem Lufteinlass (16).

4. Ofen nach Anspruch 3, umfassend einen Ventilator, der zum Zuführen von Luft in den Ofenhohlraum verwendet wird, wobei der Luftstrom zu der Sensoranordnung von dem in den Hohlraum geführten Luftvolumen abgelenkt wird.

5. Ofen nach Anspruch 3, umfassend einen Ventilator zum Bereitstellen von Luft in den Ofenhohlraum und einen dedizierten Ventilator zum Zuführen von Luft zu der Sensoranordnung unabhängig von dem Betrieb des Ventilators zum Bereitstellen von Luft in den Ofenhohlraum.

6. Ofen nach einem der vorhergehenden Ansprüche, wobei der Sensor (14, 64) mindestens eines eines optischen Sensors, eines Bildgebungssensors, eines Feuchtigkeitssensors, eines Temperatursensors, eines Gassensors, eines Schallsensors und eines chemischen Sensors umfasst.

7. Ofen nach einem der vorhergehenden Ansprüche, umfassend eine Abdeckung (32; 69), die einen Empfangsbereich des Sensorelements (14, 64) abdeckt, die jedoch für die durch den Sensor zu detektierenden physikalischen oder chemischen Parameter durchlässig ist.

8. Ofen nach Anspruch 7, wobei der Sensor ein Feuchtigkeitssensor (64) ist und die Abdeckung eine Membran (68) umfasst, die für Wasserdampf durchlässig ist.

9. Ofen nach Anspruch 7, wobei der Sensor (14) ein optischer Sensor ist und die Abdeckung (32) ein transparentes Element umfasst.

10. Ofen nach Anspruch 9, wobei das transparente Element (32) als ein optisches Filter und/oder eine optische Linse ausgestaltet ist.

11. Ofen nach einem der vorhergehenden Ansprüche, wobei das Gehäuse (12) oder Teile davon aus einem Material bestehen, das eine Wärmeleitfähigkeit bei Standardbedingungen von weniger als 10 W/m·K, vorzugsweise weniger als 1 W/m-K, aufweist.

12. Ofen nach einem der vorhergehenden Ansprüche, ferner umfassend eine Gehäusehalterung (52) zum Anbringen des Gehäuses an einer Wand (24) des Ofenhohlraums (22).

13. Ofen nach Anspruch 12, wobei die Gehäusehalterung (52) aus einem Material besteht, das eine geringere Wärmeleitfähigkeit als das Gehäuse (12) aufweist.

14. Ofen nach Anspruch 7, wobei der Luftauslass eine oder mehrere Auslassöffnungen (38) umfasst, die sich im Umfang der Abdeckung (32, 68) befinden.

15. Ofen nach einem der Ansprüche 1 bis 13, wobei der Luftauslass in einer Wand des Gehäuses (12) angeordnet ist, um Luft zur Außenseite des Gehäuses auszustoßen.

16. Ofen nach einem der Ansprüche 1 bis 13, wobei der Luftauslass (18) mit einer Leitung zum Entfernen von Luft aus der Anordnung (10) verbunden ist.

17. Ofen nach einem der vorhergehenden Ansprüche, ferner umfassend eine Isolationsschicht (62) an einer Wand (28) des Gehäuses (12), die dem Ofenhohlraum (22) zugewandt ist.

## Revendications

1. Four comprenant :
un moufle de four qui entoure une cavité de four (22) ;
un ensemble capteur (10) comprenant un élément capteur (14) configuré pour surveiller l'intérieur de la cavité de four (12), dans lequel l'ensemble capteur (10) est monté sur un côté extérieur d'une paroi (24) de la cavité de four (22) et communique avec l'intérieur de la cavité de four par l'intermédiaire d'une région placée dans la paroi de la cavité de four qui est perméable au paramètre physique ou chimique à détecter par le capteur ;
au moins un ventilateur agencé pour produire de l'air pour refroidir l'ensemble capteur (10),
l'ensemble capteur (10) comportant un logement (12) dans lequel le capteur (14, 64) est disposé de façon à pouvoir communiquer avec l'intérieur de la cavité de four par l'intermédiaire de la région perméable dans la paroi de la cavité de four ;
le logement (12) ayant une entrée d'air (16) destinée à introduire de l'air dans le logement (12) ;
le logement (12) ayant au moins une sortie d'air (18, 38) à travers laquelle l'air peut quitter le logement (12) ; le four étant **caractérisé en ce que** :
l'ensemble capteur (10) comprend un dissipateur thermique (20) disposé à l'intérieur du logement (12) en contact avec le capteur (14, 64).

2. Four selon la revendication 1, comprenant en outre :
un matériau d'interface thermique disposé entre le dissipateur thermique (20) et le capteur (14, 64).

3. Four selon la revendication 1, comprenant un ventilateur pour introduire l'air ambiant dans l'entrée d'air (16).

4. Four selon la revendication 3, comprenant un ventilateur qui est utilisé pour introduire l'air dans la cavité de four, dans lequel le flux d'air vers l'ensemble capteur est détourné du volume d'air qui passe dans la cavité.

5. Four selon la revendication 3, comprenant un ventilateur destiné à fournir l'air dans la cavité de four, et un ventilateur dédié destiné à introduire l'air dans l'ensemble capteur indépendamment du fonctionnement du ventilateur destiné à fournir l'air dans la cavité de four.

6. Four selon l'une quelconque des revendications précédentes, dans lequel le capteur (14, 64) comprend au moins l'un d'un capteur optique, d'un système d'imagerie, d'un capteur d'humidité, d'un capteur de température, d'un capteur de gaz, d'un capteur de sons et d'un capteur chimique.

7. Four selon l'une quelconque des revendications précédentes, comprenant un couvercle (32 ; 68) qui recouvre une région de réception de l'élément capteur (14, 64) mais qui est perméable au paramètre physique ou chimique à détecter par le capteur.

8. Four selon la revendication 7, dans lequel le capteur est un capteur d'humidité (64) et le couvercle comprend une membrane (68) qui est perméable à la vapeur d'eau.

9. Four selon la revendication 7, dans lequel le capteur (14) est un capteur optique et le couvercle (32) comprend un élément transparent.

10. Four selon la revendication 9, dans lequel l'élément transparent (32) est conçu en tant que filtre et/ou lentille optique.

11. Four selon l'une quelconque des revendications précédentes, dans lequel le logement (12) ou des parties de celui-ci sont constitués d'un matériau présentant une conductivité thermique dans des conditions standard inférieure à 10 W/m·K, de préférence inférieure à 1 W/m•K.

12. Four selon l'une quelconque des revendications précédentes, comprenant en outre un support de logement (52) destiné à monter le logement sur une paroi (24) de la cavité de four (22).

13. Four selon la revendication 12, dans lequel le support de logement (52) est constitué d'un matériau présentant une conductivité thermique inférieure à celle du logement (12).

14. Four selon la revendication 7, dans lequel la sortie d'air comprend une ou plusieurs ouvertures de sortie (38) situées dans le périmètre du couvercle (32, 68).

15. Four selon l'une quelconque des revendications 1 à 13, dans lequel la sortie d'air est située dans une paroi du logement (12) de façon à expulser l'air sur le côté extérieur du logement.

16. Four selon l'une quelconque des revendications 1 à 13, dans lequel la sortie d'air (18) est reliée à un conduit pour supprimer l'air de l'ensemble (10).

17. Four selon l'une quelconque des revendications précédentes, comprenant en outre une couche d'isolation (62) sur une paroi (28) du logement (12) orientée vers la cavité de four (22).
